# EUROPEAN PATENT APPLICATION

(11) **EP 4 254 592 A1**
(43) Date of publication of application: **04.10.2023**
(21) Application number: 22165495.7
(22) Date of filing: 30.03.2022
(51) Int. Cl.: H01M 10/42, H01M 10/48, H01M 50/509, H01M 50/519, H01M 50/526, B62M 6/90

(54) **A BATTERY PACK FOR AN ELECTRIC VEHICLE**

(71) Applicant: BMZ Germany GmbH, 63791 Karlstein am Main (DE)
(72) Inventor: Bauer, Sven, 63791 Karlstein am Main (DE); Etzold, Alexander, 63791 Karlstein am Main (DE)
(74) Representative: Wroblewski, Marcin Jan

(57) **Abstract**

A battery pack (1) for an electric vehicle, in particular an electric bike, comprising a plurality of battery cells (2) grouped in battery bricks (3) connected in series. The battery bricks (3) are grouped into at least two sections (4, 5, 6), wherein one of the sections (5) is a balancing section, and the battery cells (2) forming battery bricks (3) of the balancing section (5) are arranged such that two battery cells (2) connected in parallel along radial direction of the battery pack (1) are connected in parallel to the one of the battery cell (2) along the longitudinal direction of the battery pack (1) to form battery bricks (3), battery cells (2) forming battery bricks (3) of the remaining sections (4. 6) are connected in parallel along radial direction of the battery pack (1), and each of the battery bricks (3) of the balancing section have the same resistance.

## Description

### Technical field

The present invention relates to a battery pack for an electric vehicle, in particular an electric bike.

### Background of the invention

From Chinese utility model application CN202423430U there is known a flexible circuit connection structure of battery packs, in particular a flexible circuit connection structure of battery packs for electric vehicles and electric buses. The flexible circuit connection structure comprising two battery packs containing charging/discharging batteries connected in series and circuit boards of substantially rectangular shape positioned between successive battery layers. The flexible circuit connection structure further comprises flexible conductors used to interconnect circuit boards of adjacent battery packs. In turn, the successive layers of a given battery pack are connected to each other by nuts and threaded studs. Using the disclosed structure, it is possible to ensure the appropriate voltage of the battery packs, but also to ensure a balance of charging and discharging of the battery pack.

American patent US8828585B2 reveals a connecting member, and in particular a connecting member for connecting two or more battery modules to equalize internal resistances between an external circuit connection point and connection points of the battery modules. The connecting member is arranged so that it allows battery modules to be connected in parallel with each other. The connecting member comprises a first connection circuit connected to the external circuit connection point and second connection circuits connected sequentially between the first connection circuit and the respective battery modules. The first connection circuit has an equal width and thickness. In turn, second connection circuits are characterized in that one of their parameters, namely length, width or thickness, increases with increasing the distance between the connection point of the external circuit and the battery modules. From US8828585B2 there is also known a middle or large-sized battery pack comprising such connecting member. Said connecting member and battery pack might be used in electric vehicles and hybrid vehicles.

European patent application EP3699980A1 discloses a battery pack for use in, inter alia, electric bicycles. The battery pack comprises batteries, a printed circuit board connecting said batteries together, and a power bus connected to the printed circuit board to form a charging/discharging path for the batteries. The disclosed battery pack ensures that the electrical resistance of the charge/discharge path is maintained uniformly according to the distance from the output terminal of the battery pack and irrespective of the position of the battery, resulting in a uniform load distribution with respect to all batteries of the battery pack.

Chinese utility model CN211404566U discloses a battery module for use as a working or propulsion power supply in means of transport, for example in electric vehicles. The battery module comprises a copper-clad multilayer printed circuit board and a set of connector pairs that can be either crimped or welded. Each connector pair includes a female connector and a male connector. One of the end connector pairs represents positive connectors, and the other of the end connector pairs represents negative connectors. In turn, the pair of connectors located between the pair of positive connectors and the pair of negative connectors is a pair of voltage equalizing connectors. The solution according to CN211404566U focuses on providing standardized battery modules that could be connected together in series to provide the appropriate voltage and power output.

American patent application US20140212695A1 discloses a high-voltage chargeable battery pack for electric vehicle. It raises a problem of improvement of conventional techniques for connecting energy storage elements in high-voltage battery modules. A solution of the problem is to use a flexible printed circuit board connecting the batteries of said module. The flexible printed circuit board comprises a flexible conductive layer located between insulating layers, wherein a thickness of each layer is less than 0.1 mm and a conductive layer defines a flexible interconnection pattern. Furthermore, the board allows parallel and series connection of the batteries.

German patent application DE102018006691A1 discloses a battery system for vehicles such as motor vehicles or pedelecs, electric bicycles, electric scooters or LEVs (light electric vehicles). The battery system comprises a flexible printed circuit for managing the battery system, clamping elements with connectors for connecting either individual batteries or batteries connected in groups with the flexible printed circuit, and batteries. The clamping elements and connectors may be a single component made of metal. The presented battery system focus on simplifying battery circuits while maintaining the required total voltage and/or total capacity.

Although the above-cited patent literature discloses variety of proposals of battery packs for electric vehicles there is still a problem with maintaining uniform load and a balance in charging and discharging of battery cells in such battery packs especially when using both parallel and serial connections of battery cells in such battery packs. Therefore, the object of the invention is to provide a battery pack which improves uniform load in such battery pack as well as uniform charging and discharging of the battery cells regardless of their type of connection.

### The Essence of the Invention

The object of the invention is a battery pack for an electric vehicle, in particular an electric bike, comprising a plurality of battery cells grouped in battery bricks connected in series. The battery bricks are grouped into at least two sections, wherein one of the sections is a balancing section, and the battery cells forming the battery bricks of the balancing section are arranged such that two battery cells connected in parallel along radial direction of the battery pack are connected in parallel to the one of the battery cell along the longitudinal direction of the battery pack to form the battery bricks, the battery cells forming the battery bricks of the remaining sections are connected in parallel along radial direction of the battery pack, and each of the battery bricks of the balancing section has the same resistance.

The application of the battery bricks grouped into at least two sections, wherein one of the sections is the balancing section, and the battery cells forming the battery bricks of the balancing section arranged such that two battery cells connected in parallel along radial direction of the battery pack are connected in parallel to the one of the battery cell along the longitudinal direction of the battery pack to form the battery bricks, and the battery cells forming the battery bricks of the remaining sections connected in parallel along radial direction of the battery pack, wherein each of the battery bricks of the balancing section has the same resistance improves uniform load in such battery pack as well as uniform charging and discharging of the batteries regardless of their type of connection. It is done despite asymmetrical arrangement of the battery cells.

Preferably, the parallel connection of the battery cells of the balancing section as well as the serial connection of the battery bricks of the balancing section are realized via at least one printed circuit board being a multilayer power connection printed circuit board.

The realization of the parallel connection of the battery cells of the balancing section as well as the serial connection of the battery bricks of the balancing section via at least one printed circuit board being a multilayer power connection printed circuit board ensures reduction of the space occupied by the parallel connection of the battery cells of the balancing section as well as the serial connection of the battery bricks of the balancing section. Furthermore, such realization of those connections provides improvement and optimalization of uniform load as well as uniform charging and discharging of the batteries.

Preferably, the multilayer power connection printed circuit board comprises at least three layers, wherein the outer layers connect in parallel the battery cells of the battery bricks of the balancing section, and the inner layer connect in series the battery bricks of the balancing section, and wherein the outer and inner layers are adapted such that the charge flowing through the inner layer is equal to the nominal value of the battery pack, and charge flowing through one of the outer layers sums with charge flowing through the other outer layer up to the total current value of the battery pack.

The application of the at least three layers allows design of complex interconnection networks. Further, the application of the at least three layers allows the usage of variety of materials available for multilayer power connection printed circuit board manufacturing.

Preferably, one of the outer layers connects in parallel the battery cells within the two of the battery bricks of the balancing section, and the other of the outer layers connects in parallel the battery cells in the remaining of the battery bricks of the balancing section.

The application of such connections of the battery cells further improves and even ensures equalizing of voltage of each battery cell and a state of charging of each battery cell in the battery pack when they are at a full charge. As a result, each battery cell discharges the same amount.

Preferably, the inner layer comprises at least two layers of a conductive material.

Preferably, the outer layers comprise at least two layers of a conductive material.

Preferably, the outer layers and the inner layer are made in the form of cross-sectional nets.

Preferably, the outer layers and the inner layer of multilayer power connection printed circuit board are made of copper.

Preferably, the multilayer power connection printed circuit board is a flexible-board.

Preferably, the multilayer power connection printed circuit board comprises interconnectors for connecting the outer layers and the inner layer with the battery cells.

The application of the interconnectors for connecting the outer layers and the inner layer with the battery cells ensures formation of reliable connections which are not prone to connection errors.

Preferably, the battery pack comprises at least three sections and the balancing section is located in the center.

The application of the balancing section located in the center, thus symmetrically with respect to the other elements of the battery pack, makes it easier to assemble such battery pack and as a result it eliminates potential errors at the manufacturing stage. As a consequence, it leads to reduction of manufacturing costs.

Preferably, the battery bricks are grouped into at least four sections and two of the sections are the balancing sections.

Preferably, the battery bricks of sections having the battery cells connected in parallel along radial direction of the battery pack are connected via connectors made of nickel or cladded material comprising the following layers: nickel, austenitic stainless steel, copper, austenitic stainless steel and nickel, with the ratio of the copper 60%.

Preferably, the battery pack further comprises a battery management system and at least one thermistor connected to the battery cell.

The application of the battery management system and the at least one thermistor connected to the battery cell provide thermal protection for the battery pack.

Preferably, the interconnectors are welded with a plate-shaped connecting members, in particular in the same welding process.

The welding of the interconnectors with the plate-shaped connecting members, in particular in the same welding process, ensures simplification of a manufacturing process of the multilayer power connection printed circuit board and as a result simplification of a manufacturing process of the whole battery pack.

### Advantages of the invention

The battery pack according to the invention due to the proposed connections of battery cells allows to maintain the same mounting space for different arrangements. As a result, battery pack allows for use of battery cell housings and battery cell holders used in one battery cell arrangement in another battery cell arrangements. For example, the battery pack according to the invention enables to use casings and cell holders from 10S4P battery cell arrangement with a voltage of 36V in 13S3P battery cell arrangement with a voltage of 48V. The 10S4P arrangement means that ten cells of the battery pack are connected in series and four cells of the battery pack are connected in parallel. The 13S3P arrangement means that thirteen cells of the battery pack are connected in series and three cells of the battery pack are connected in parallel.

The battery pack according to the invention provides an increase in the operating length of battery cells, and consequently an increase in the driving time of an electrical vehicle powered by such battery pack.

The battery pack according to the invention ensures increase in the freedom of a battery cell arrangement.

The battery pack according to the invention ensures increase in the freedom of a battery pack case design.

The battery pack according to the invention provides decrease in production costs of such battery pack.

The battery pack according to the invention provides increase in effectiveness of production of such battery pack.

### Description of the drawings

The subject of the invention is shown in the embodiments in a drawing, in which:
- Fig.1: presents a battery pack according to the invention in a perspective view;
- Fig.2: presents an electrical scheme of a battery pack according to the invention;

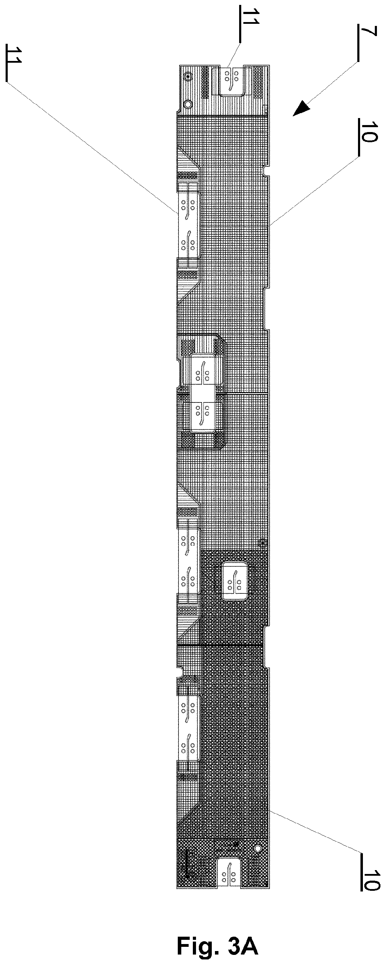

- Fig.3A: presents a printed circuit board of a battery pack according to the invention in a top view;

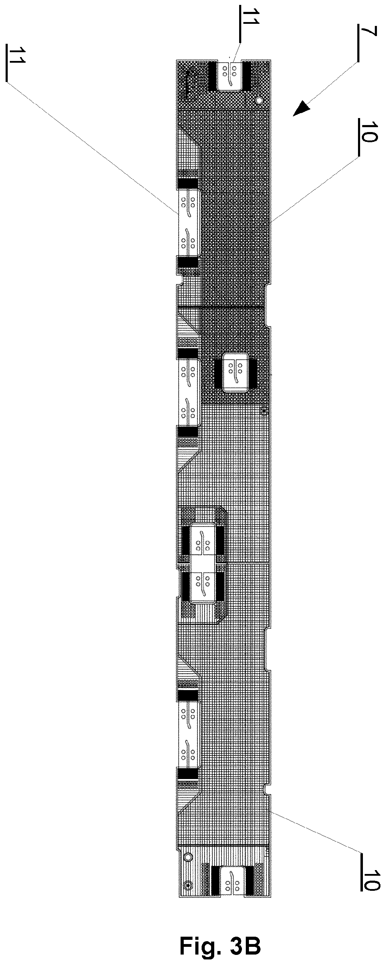

- Fig.3B: presents the bottom layer of a printed circuit board of a battery pack according to the invention in a bottom view;

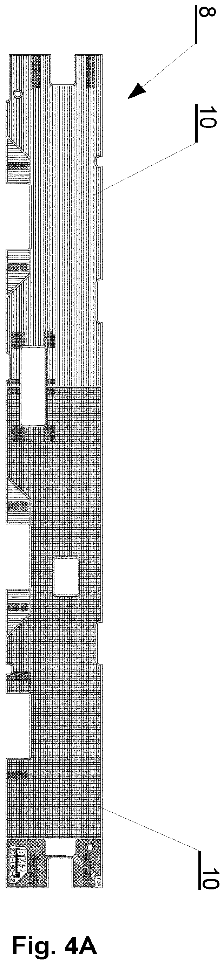

- Fig.4A: presents the top layer of a printed circuit board of a battery pack according to the invention in a top view;

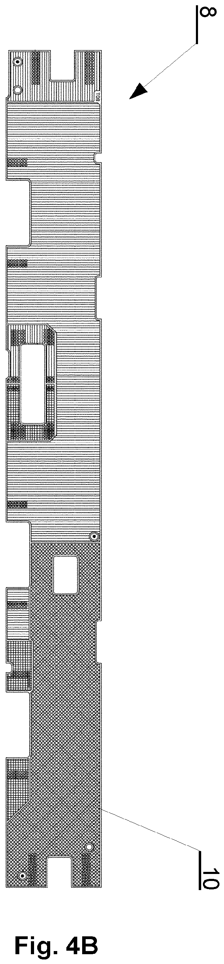

- Fig.4B: presents the bottom layer of a printed circuit board of a battery pack according to the invention in a top view;

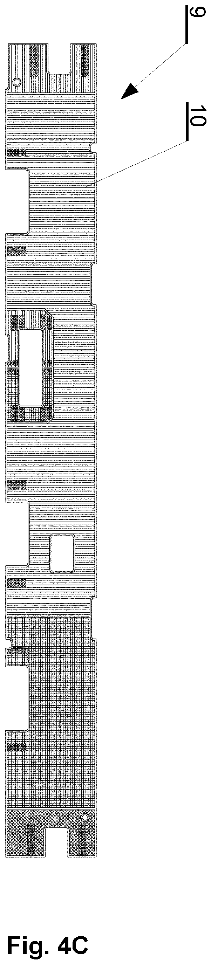

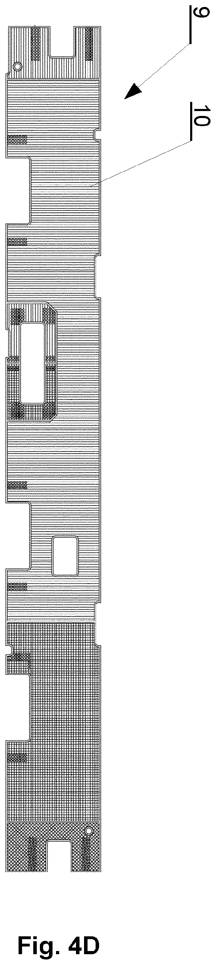

- Fig.4C-4D: present the inner layers of a printed circuit board of a battery pack according to the invention in a top view;

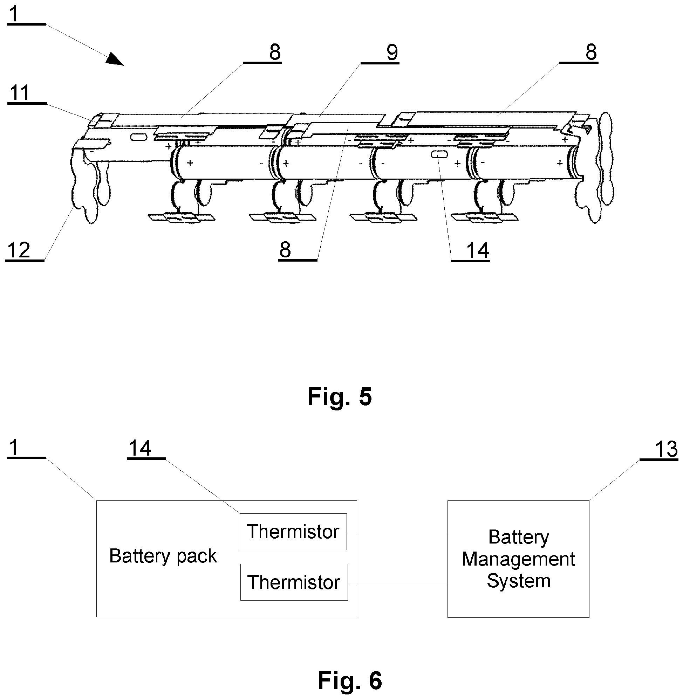

- Fig.5: presents schematically a battery pack with thermistors according to the invention;
- Fig.6: presents schematically a battery pack with thermistors and a battery management system according to the invention.

### Detailed description of the invention

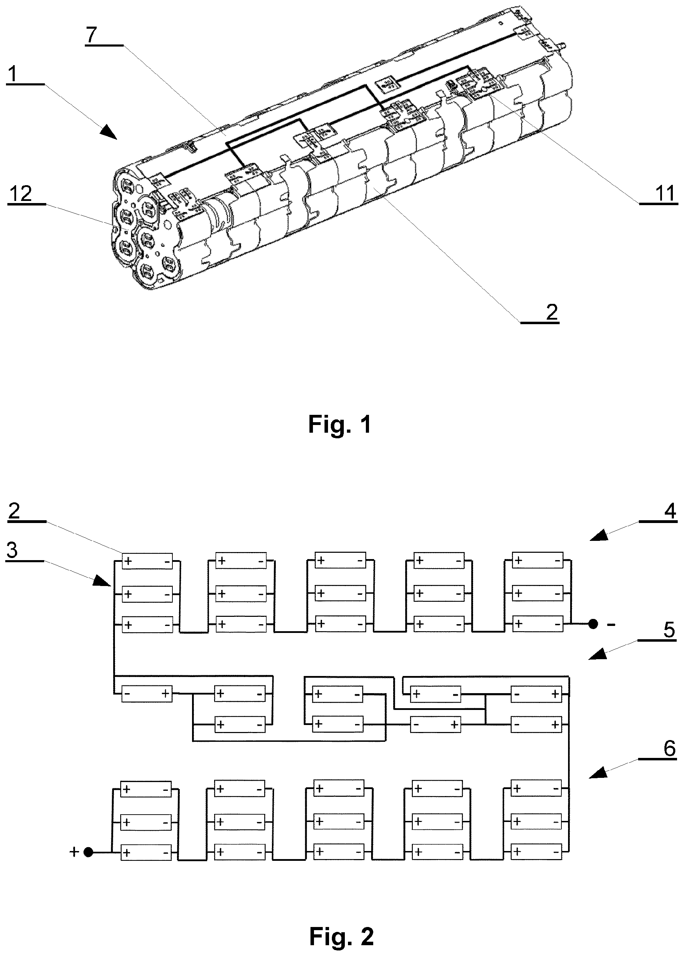

A battery pack 1 for an electric vehicle, in particular an electric bike, according to the first embodiment (Fig. 1) comprises a plurality of battery cells 2 grouped in battery bricks 3 connected in series, for example along the longitudinal axis of the battery pack 1. The battery bricks 3 are grouped into three sections 4, 5, 6, wherein the section located in the center is a balancing section 5. The application of the balancing section 5 located in the center, thus symmetrically with respect to the other elements of the battery pack 1, makes it easier to assemble such battery pack and as a result it eliminates potential errors at the manufacturing stage. As a consequence, it leads to reduction of manufacturing costs.

In another embodiment, the battery bricks 3 are grouped into two sections and one of the sections is balancing section. In yet another embodiment, the battery bricks are grouped into four sections and two of the sections are balancing sections. In both cases, the battery pack operates in a manner analogous to the one explained in this embodiment.

The battery cells 2 forming battery bricks 3 of the balancing section 5 are arranged such that two battery cells 2 connected in parallel along radial direction of the battery pack 1 are connected in parallel to the one of the battery cells 2 along the longitudinal direction of the battery pack 1 to form battery bricks 3. Each of the battery bricks 3 of the balancing section 5 has the same resistance. The battery cells 2 forming battery bricks 3 of the remaining sections 4, 6 are connected in parallel along radial direction of the battery pack 1 (Fig. 2). It improves the load in such battery pack to be uniform as well as uniform charging and discharging of the battery cells regardless of their type of connection. It is done despite an asymmetrical arrangement of the battery cells.

The battery bricks 3 of sections 4, 5, 6 having the battery cells 2 connected in parallel along radial direction of the battery pack 1 are connected via connectors made of a cladded material comprising the following layers: nickel, austenitic stainless steel, copper, austenitic stainless steel and nickel, with the ratio of the copper 60%. In another embodiment, the connectors are made of nickel.

The parallel connection of the battery cells 2 of the balancing section 5 as well as the serial connection of the battery bricks 3 of the balancing section 5 are realized via a printed circuit board 7. The printed circuit board 7 is a flexible-board and a multilayer power connection printed circuit board comprising outer layers 8 and inner layers 9, for example two outer layers 8 and two inner layers 9. The realization of the mentioned connections via the printed circuit board 7 being a multilayer power connection printed circuit board ensures improvement and optimalization of uniform load as well as uniform charging and discharging of the battery cells 2. Furthermore, the application of the layers 8, 9, in particular four layers as in the example, allows the usage of a variety of materials available for multilayer power connection printed circuit board manufacturing. The outer layers 8 and inner layers 9 are made in the form of cross-sectional nets 10 made of copper. Each of the outer layers 8 and the inner layers 9 has a thickness of 35 µm. In another embodiment, each of the outer layers 8 and the inner layers 9 has a thickness of 75 µm. In yet another embodiment, each of the outer layers 8 and the inner layers 9 has a thickness of 100 µm. The application of thicker layers 8, 9, as in the mentioned embodiments, provides a lower resistance of these layers while maintaining their preset width. The outer layers 8 and the inner layers 9 have varying degrees of copper fill and they are electrically isolated from each other, which makes the layers 8, 9 selectively connected to each other. The application of the isolated layers 8, 9, in particular four layers as in the example, allows design of complex interconnection networks. One of the outer layers 8, for example the top layer, connects in parallel the battery cells 2 within the two of the battery bricks 3 of the balancing section 5, and the other of the outer layers 8, for example the bottom layer, connects in parallel the battery cells 2 in the remaining of the battery bricks 3 of the balancing section 5. In turn, the inner layers 9 connect in series the battery bricks 3 of the balancing section 5. The outer layers 8 and the inner layers 9 are adapted such that the charge flowing through the inner layers 9 is equal to the nominal value of the battery pack 1, and charge flowing through one of the outer layers 8, for example 2/3 current in the top layer, sums with charge flowing through the other outer layer 8, for example 1/3 current in the bottom layer, up to the total current value of the battery pack 1. The application of such connections of the battery cells 2 further improves or even ensures equalizing of voltage of each battery cell 2 and a state of charging of each battery cell 2 in the battery pack 1 when they are at a full charge. As a result each battery cell discharges the same amount. The multilayer power connection printed circuit board 7 comprises also interconnectors 11 for connecting the outer layers 8 and the inner layers 9 with the battery cells 2. The interconnectors 11 are welded with a plate-shaped connecting members 12, in particular in the same welding process. The application of the interconnectors 11 for connecting the outer layers 8 and the inner layer 9 with the battery cells 2 ensures formation of reliable connections which are not prone to connection errors. Furthermore, the welding of the interconnectors 11 with the plate-shaped connecting members 12, in particular in the same welding process, ensures simplification of a manufacturing process of the printed the multilayer power connection printed circuit board 7 and as a result simplification of a manufacturing process of the whole battery pack 1.

The battery pack 1 comprises a battery management system 13 and thermistors 14 connected to the battery cells 2 as well. The thermistors 14, for example NTC thermistors, are located where the highest current losses occur causing a rapid rise in temperature. Further, the thermistors 14 are connected to the battery management system 13. The thermistors 14 smoothly decrease the resistance between their terminals as their temperature rises and the battery management system 13 shuts off the power to protect the battery pack 1 from overheating. Thus, the battery management system 13 and the thermistors 14provide thermal protection for the battery pack 1.

## Claims

1. A battery pack (1) for an electric vehicle, in particular an electric bike, comprising:
- a plurality of battery cells (2) grouped in battery bricks (3) connected in series, **characterized in that**
- the battery bricks (3) are grouped into at least two sections (4, 5, 6), wherein one of the sections is a balancing section (5), and
- the battery cells (2) forming battery bricks (3) of the balancing section (5) are arranged such that two battery cells (2) connected in parallel along radial direction of the battery pack (1) are connected in parallel to the one of the battery cells (2) along the longitudinal direction of the battery pack (1) to form the battery bricks (3), and
- the battery cells (2) forming the battery bricks (3) of the remaining sections (4, 6) are connected in parallel along radial direction of the battery pack (1), and
- each of the battery bricks (3) of the balancing section (5) has the same resistance.

2. A battery pack (1) according to claim 1, **characterized in that** the parallel connection of the battery cells (2) of the balancing section (5) as well as the serial connection of the battery bricks (3) of the balancing section (5) are realized via at least one printed circuit board (7) being a multilayer power connection printed circuit board.

3. A battery pack (1) according to claim 2, **characterized in that** the multilayer power connection printed circuit board (7) comprises at least three layers (8, 9), wherein:
- the outer layers (8) connect in parallel the battery cells (2) of the battery bricks (3) of the balancing section (5), and
- the inner layer (9) connects in series the battery bricks (3) of the balancing section (5), and
wherein the layers (8, 9) are adapted such that:
- the charge flowing through the inner layer (9) is equal to the nominal value of the battery pack (1), and
- charge flowing through one of the outer layers (8) sums with charge flowing through the other outer layer (8) up to the total current value of the battery pack (1).

4. A battery pack (1) according to claim 3, **characterized in that**
- one of the outer layers (8) connects in parallel the battery cells (2) within the two of the battery bricks (3) of the balancing section (5), and
- the other of the outer layers (8) connects in parallel the battery cells (2) in the remaining of the battery bricks (3) of the balancing section (5).

5. A battery pack (1) according to any of the claims 3-4, **characterized in that** the inner layer (9) comprises at least two layers of a conductive material.

6. A battery pack (1) according to any of the claims 3-5, **characterized in that** the outer layers (8) comprises at least two layers of a conductive material.

7. A battery pack (1) according to any of the claims 3-6, **characterized in that** the layers (8, 9) are made in the form of cross-sectional nets (10).

8. A battery pack (1) according to any of the claims 3-7, **characterized in that** the layers (8, 9) of the multilayer power connection printed circuit board (7) are made of copper.

9. A battery pack (1) according to any of the claims 2-8, **characterized in that** the multilayer power connection printed circuit board (7) is a flexible-board.

10. A battery pack (1) according to any of the claims 2-9, **characterized in that** the multilayer power connection printed circuit board (7) comprises interconnectors (11) for connecting the layers (8, 9) with the battery cells (2).

11. A battery pack (1) according to any of the preceding claims, **characterized in that** it comprises at least three sections (4, 5, 6) and the balancing section (5) is located in the center.

12. A battery pack (1) according to any of the preceding claims, **characterized in that** the battery bricks (3) are grouped into at least four sections (4, 5, 6) and two of the sections (5) are balancing sections.

13. A battery pack (1) according to any of the preceding claims, **characterized in that** the battery bricks (3) of the sections (4, 5, 6) having the battery cells (2) connected in parallel along radial direction of the battery pack (1) are connected via connectors made of:
- nickel or
- cladded material comprising the following layers: nickel, austenitic stainless steel copper, austenitic stainless steel and nickel, with the ratio of the copper 60%.

14. A battery pack according to any of preceding claims, **characterized in that** it further comprises a battery management system (13) and at least one thermistor (14) connected to the battery cell (2).

15. A battery pack (1) according to any of the claims 10-14, **characterized in that** the interconnectors (11) are welded with a plate-shaped connecting members (12), in particular in the same welding process.
